# EUROPEAN PATENT APPLICATION

(11) **EP 3 605 439 A1**
(43) Date of publication of application: **05.02.2020**
(21) Application number: 18774244.0
(22) Date of filing: 25.01.2018
(51) Int. Cl.: G06Q 50/10, G06F 3/048, G06F 13/00, G06Q 50/00

(54) **INFORMATION PROCESSING DEVICE, INFORMATION PROCESSING METHOD, AND PROGRAM**

(30) Priority: 31.03.2017 JP 2017071508
(71) Applicant: Sony Corporation, Tokyo 108-0075 (JP)
(72) Inventor: HOSODA, Yasuhide, Tokyo 108-0075 (JP)
(74) Representative: Witte, Weller & Partner Patentanwälte mbB
(86) International application number: PCT/JP2018/002215
(87) International publication number: WO 2018/179745

(57) **Abstract**

To provide an information processing apparatus, an information processing method, and a program capable of presenting appropriate information so as to bring out a more preferable user's character.

An information processing apparatus includes a control unit that determines a character of a user, determines whether or not it is a timing to change to a predetermined character, and performs control to output a trigger for prompting a change to the predetermined character at the change timing.

## Description

### TECHNICAL FIELD

The present disclosure relates to an information processing apparatus, an information processing method, and a program.

### BACKGROUND ART

Conventionally, a person uses a plurality of characters that he/she has properly according to various scenes (places, environments, etc.). For example, a person switches his/her attitude, the way of thinking, the way of speaking, and the like naturally or consciously between at the time of being in an office and at the time of being with a friend, or between at the time of being in school and at the time of being at home.

Here, in the recent information presentation technology, a virtual agent is provided in a system such that the agent provides information desired by a user by voice or image. With regard to such a technology, for example, Patent Document 1 below discloses an information terminal apparatus which enables a user to intuitively understand a change of his/her taste or hobby by gradually changing and displaying visual aspects of a character according to the amount of change in the user's characteristics.

### CITATION LIST

### PATENT DOCUMENT

Patent Document 1: Japanese Patent Application Laid-Open No. 2010-204070

### SUMMARY OF THE INVENTION

### PROBLEMS TO BE SOLVED BY THE INVENTION

However, the related art does not detect or analyze a plurality of characters possessed by a user, and merely changes visual aspects of an agent according to change in the user's taste or hobby.

Furthermore, in a case where the user is tired or busy, it may be difficult for the user to be aware or to control his/her character suitable for the current scene.

Thus, the present disclosure proposes an information processing apparatus, an information processing method, and a program capable of presenting appropriate information so as to bring out a more preferable user's character.

### SOLUTIONS TO PROBLEMS

The present disclosure proposes an information processing apparatus including a control unit that determines a character of a user, determines whether or not it is a timing to change to a predetermined character, and performs control to output a trigger for prompting a change to the predetermined character at the change timing.

The present disclosure proposes an information processing method, by a processor, including determining a character of a user, determining whether or not it is a timing to change to a predetermined character, and performing control to output a trigger for prompting a change to the predetermined character at the change timing.

The present disclosure proposes a program for causing a computer to function as a control unit configured to determine a character of a user, determine whether or not it is a timing to change to a predetermined character, and control to output a trigger for prompting a change to the predetermined character at the change timing.

### EFFECTS OF THE INVENTION

As described above, according to the present disclosure, it is possible to present appropriate information so as to bring out a more preferable user's character.

Note that the above-described effect is not necessarily limited, and any one of the effects described in this specification together with or in place of the above-described effect, or other effects that can be grasped from this specification may be exhibited.

### BRIEF DESCRIPTION OF DRAWINGS

Fig. 1 is a view explaining an overview of an information processing system according to an embodiment of the present disclosure.
Fig. 2 is a view illustrating an example of the entire configuration of an information processing system according to the present embodiment.
Fig. 3 is a block diagram illustrating an example of the configuration of a user terminal according to the present embodiment.
Fig. 4 is a block diagram illustrating an example of the configuration of a server according to the present embodiment.
Fig. 5 is a flowchart of character determination processing according to the present embodiment.
Fig. 6 is a table indicating an example of main character information of the user according to the present embodiment.
Fig. 7 is a table indicating an example of a daily action pattern and appearance characters according to the present embodiment.
Fig. 8 is a flowchart of change trigger output processing according to the present embodiment.
Fig. 9 is a flowchart of a process of correcting the priority of change triggers according to the present embodiment.
Fig. 10 is a flowchart of operation processing when parameter correction is requested by the user according to the present embodiment.
Fig. 11 is a table of an example of parameter correction according to the present embodiment.
Fig. 12 is a table of an example of minor character information according to the present embodiment.
Fig. 13 is a flowchart of processing of outputting a change trigger to minor character to a minor character according to the present embodiment.
Fig. 14 is a view explaining an outline of the change trigger output processing among a plurality of agents according to the present embodiment.
Fig. 15 is a table of an example of character information of a user A according to the present embodiment.
Fig. 16 is a table of an example of character information of a user B according to the present embodiment.
Fig. 17 is a sequence diagram indicating change trigger output processing among a plurality of agents according to the present embodiment.
Fig. 18 is a diagram explaining an example of advertisement presentation according to characters according to the present embodiment.
Fig. 19 is a view explaining a case of guiding to a potential character that a user wants to be according to the present embodiment.

### MODE FOR CARRYING OUT THE INVENTION

Preferred embodiments of the present disclosure will be described in detail below with reference to the accompanying drawings. Note that, in the present specification and the drawings, components having substantially the same functional configuration are denoted by the same reference numerals, and redundant description will be omitted.

Furthermore, the explanation will be made in the following order.
1. Overview of Information Processing System According to Embodiment of Present Disclosure
2. Configuration
2-1. Configuration of User Terminal 1
2-2. Configuration of Server 2
3. Operation Processing
3-1. Character Determination Processing
3-2. Change Trigger Output Processing
3-3. Parameter Correction Processing
3-4. Processing of Outputting Change Trigger to Minor Character
3-5. Processing of Outputting Change Trigger among a Plurality of Agents
3-6. Advertising
3-7. Guidance to Potential Character that User Wants to Be
4. Summary

### <<1. Overview of Information Processing System According to Embodiment of Present Disclosure>>

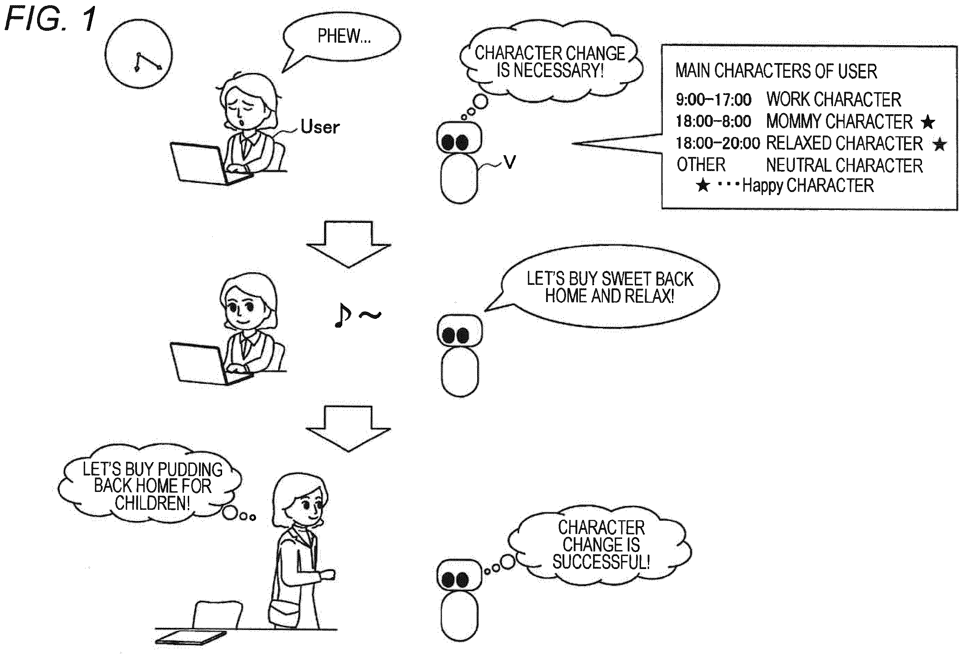

Fig. 1 is a view explaining an overview of an information processing system according to an embodiment of the present disclosure. As illustrated in Fig. 1, in the information processing system according to the present embodiment, a virtual agent V estimates a character of the user, and provides information for changing the character of the user as needed. In the present specification, a "character" refers to an attitude, a way of thinking, a way of speaking, a behavior guideline, and the like, which a person appropriately uses according to a place, environment, and the like, and can be broadly referred to as a form of a characteristic and a personality. Furthermore, it is assumed that characters are possessed by individuals by nature, those are gained in a growth process, those are created/made according to a situation and an environment, those are given by others, and those provided (derived) on the system side. Furthermore, each individual can have a plurality of characters, and the appearance frequency of each character varies depending on a person, but a character with a high appearance frequency of the person is hereinafter also referred to as a "main character".

Furthermore, in this specification, as the name of a character, for example, a name expressing emotions ("short-tempered character," "lonely character, "crybaby character," "dopey character," "fastidious character," etc.), a name expressing a role and position in society ("mammy character", "daddy character", "work character", "clerk character", "high school girl character", "celebrity character", etc.), or a names combining these ("short-tempered mammy character", "cheerful clerk character", etc.) is given as an example as appropriate.

As illustrated in Fig. 1, for example, in a case where, as a main character that the user uses properly, "work character" from 9:00 to 17:00, "mammy character" from 18:00 to 8:00 in the next morning, and "relaxed character" (character who prefers to relax calmly and leisurely) 18:00 to 20:00 sometimes are known in advance, the agent V determines whether or not it is necessary to change the character according to the user's situation or environment. Specifically, as illustrated in the upper part of Fig. 1, for example, in a case where the user sighs and looks tired, if it is in a time zone during which the user should always be a mommy character (specifically, at least at places other than an office (such as on commuting routes and at home)) with happy emotion but it is still a state of a work character (specifically, being in an office), it is determined that a character change is necessary.

In a case where it is determined that the character change is necessary, the agent V provides the user with information (hereinafter, also referred to as a change trigger) as a trigger for the user's character change. For example, as illustrated in the middle part of Fig. 1, the change trigger makes a proposal to prompt to go home, such as "Let's buy sweets back home and relax", with a music the user is often listening at the time of a mommy character and children's voice. As a result, the user can round up his/her work and change to a mommy character thinking about a house (the feeling also changes), as illustrated in the lower part of Fig. 1.

Thus, in the present embodiment, it is possible to prompt to change to a further desirable character. Note that, by setting for each character whether or not the character feels happy (hereinafter, called as a "happy characters") and by activating a change trigger to prioritize a change to the happy character, it is possible to lead the user to a happier state as a result.

Here, as an example, the agent determines the necessity of character change from the user's situation or state and gives an appropriate change trigger, but the present embodiment is not limited to this, and a change to the character linked to a schedule previously input by the user may be prompted. As a result, the change trigger can be provided at the timing desired by the user. The user may input in advance, along with the schedule, when and where, and what kind of character the user wants to be.

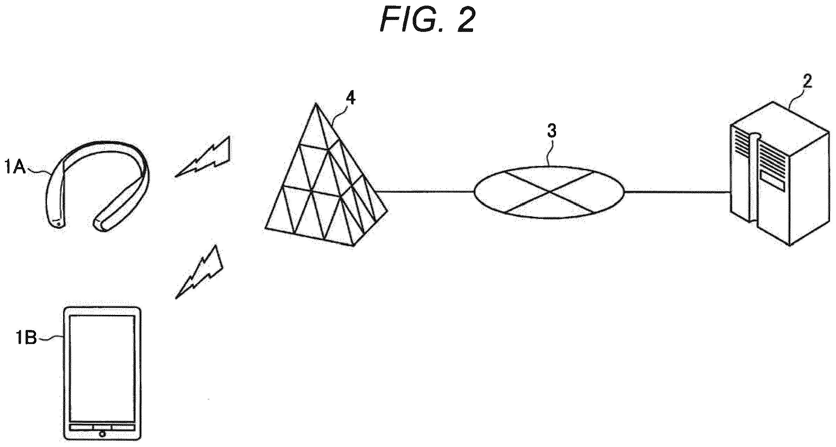

Furthermore, the virtual agent V in the present system can give a change trigger from a user terminal 1 (refer to Fig. 2) to the user by voice, music, video, picture, smell, vibration, or the like. It is assumed that the user terminal 1 is a wearable device (neck band type, smart eyeglass (binocular or monocular AR eyewear), smart earphone (for example, open air earphone), smart band (wristband type), smart watch, ear-mounted headset, shoulder type terminal, etc.), a smartphone, a mobile phone terminal, a tablet terminal, and the like.

An output method of the change trigger varies according to a function of the device. For example, sound information (voice, environmental sound, sound effect, etc.), display information (words, agent images, pictures, videos, etc., on a display screen), vibration, smell, and the like are conceivable. For example, in the case of a glasses-type terminal (AR eyewear), a change trigger may be output by text, words, or graphics superimposed on a space or on an object by AR technology. Furthermore, in the case of an ear-mounted headset or an open air earphone, a change trigger may be output by whispering at the ear, blowing a wind, applying heat, or the like such that other people do not hear it.

Furthermore, in the case of a smartphone, a tablet terminal, or the like, a change trigger is given by text, words, figures, or characters appearing at an end or a part of a display screen. Furthermore, in the case of a shoulder type terminal, basically, as with an ear-mounted headset, it is possible to give a change trigger by whispering at the ear, blowing a wind, or applying heat such that other people do not hear it, and also by vibration, shift in center of gravity, pulling on hair, or the like.

Subsequently, the entire configuration of the information processing system according to the present embodiment will be described with reference to Fig. 2. Fig. 2 is a view illustrating an example of the entire configuration of an information processing system according to the present embodiment.

As illustrated in Fig. 2, the information processing system according to the present embodiment includes the user terminal 1 and a server 2. The user terminal 1 and the server 2 can be communicably connected wirelessly or by wire, and can transmit and receive data. For example, the user terminal 1 can connect to a network 3 from a base station 4 in the periphery and communicate data with the server 2 on the network 3. Furthermore, in the example illustrated in Fig. 2, as an example of the user terminal 1, a neck band-type user terminal 1A and a smart phone-type user terminal 1B are illustrated.

The user terminal 1 transmits to the server 2 various types of information regarding the user situation used for character determination and change determination, such as position information and a user's uttered voice.

The server 2 has a function as a virtual agent, such as determination of a user character and activation of a change trigger, on the basis of information transmitted from the user terminal 1.

Note that, although the system configuration mainly performing processing on the server 2 side (cloud server) is exemplified in the present embodiment, the present disclosure is not limited to this, and a part or all of various processing such as character determination and change trigger activation may be performed on the user terminal 1 side. Furthermore, the processing according to the present embodiment may be performed by a plurality of external devices (distributed processing), or some processing may be performed by an edge server (edge computing).

The information processing system according to an embodiment of the present disclosure has been described above. Subsequently, specific configurations of respective devices included in the information processing system according to the present embodiment will be described with reference to the drawings.

### << 2. Configuration >>

### <2-1. Configuration of User Terminal 1>

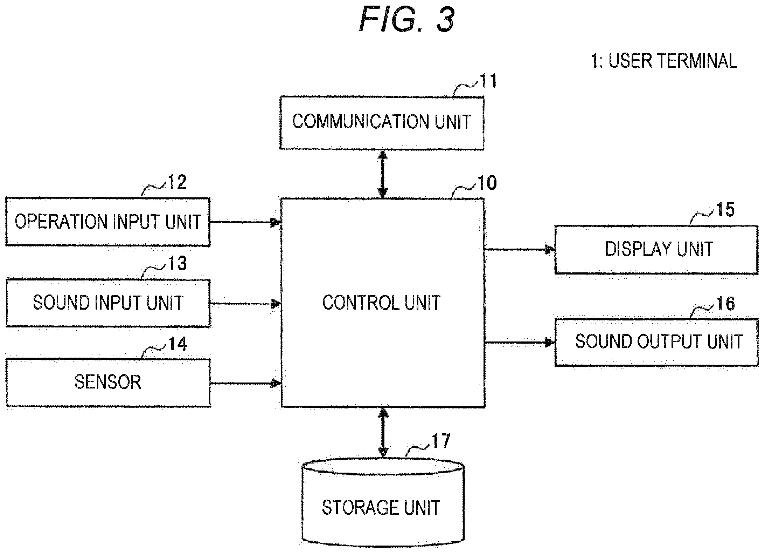

Fig. 3 is a block diagram illustrating an example of the configuration of the user terminal 1 according to the present embodiment. As illustrated in Fig. 3, the user terminal 1 includes a control unit 10, a communication unit 11, an operation input unit 12, an voice input unit 13, a sensor 14, a display unit 15, an voice output unit 16, and a storage unit 17.

The control unit 10 functions as an arithmetic processing device and a control device and controls the overall operation in the user terminal 1 according to various programs. The control unit 10 is realized by, for example, an electronic circuit such as a central processing unit (CPU) or a microprocessor. Furthermore, the control unit 10 may include a read only memory (ROM) that stores programs to be used, operation parameters, and the like, and a random access memory (RAM) that temporarily stores parameters and the like that change appropriately.

Furthermore, the control unit 10 according to the present embodiment performs control such that voice information input by the voice input unit 13 and various sensor information detected by the sensor 14 are transmitted from the communication unit 11 to the server 2. Furthermore, the control unit 10 controls the display unit 15 or the voice output unit 16 to output a change trigger received from the server 2 by the communication unit 21.

The communication unit 11 is connected to the network 3 by wire or wirelessly, and transmits/receives data to/from an external device (for example, a peripheral device, a router, a base station, the server 2 or the like). The communication unit 11 communicates with external devices by, for example, a wired/wireless local area network (LAN), Wi-Fi (registered trademark), a mobile communication network (long term evolution (LTE), third generation mobile communication system (3G)) or the like.

The operation input unit 12 receives an operation instruction from a user and outputs operation contents of the instruction to the control unit 10. The operation input unit 12 may be a touch sensor, a pressure sensor, or a proximity sensor. Alternatively, the operation input unit 12 may have a physical configuration such as a button, a switch, or a lever.

The voice input unit 13 is realized by a microphone, a microphone amplifier unit for amplifying and processing a voice signal obtained by the microphone, and an A/D converter for digital converting to a voice signal, and the voice input unit 13 outputs the voice signal to the control unit 10.

The sensor 14 detects a user's situation, state, or surrounding environment, and outputs detection information to the control unit 10. The sensor 14 may be a plurality of sensor groups or a plurality of types of sensors. Examples of the sensor 14 include a motion sensor (acceleration sensor, gyro sensor, geomagnetic sensor, etc.), a position sensor (indoor positioning based on communication with Wi-Fi (registered trademark), Bluetooth (registered trademark), etc., or outdoor positioning using GPS etc.), a biological sensor (heartbeat sensor, pulse sensor, sweat sensor, body temperature sensor, electroencephalogram sensor, myoelectric sensor, etc.), an imaging sensor (camera), and an environment sensor (temperature sensor, humidity sensor, luminance sensor, rain sensor, etc.).

The display unit 15 is a display device that outputs an operation screen, a menu screen, and the like. The display unit 15 may be, for example, a display device such as a liquid crystal display (LCD) or an organic electroluminescence (EL) display. Furthermore, the display unit 15 according to the present embodiment can output a user questionnaire for character determination as described later and a video as a change trigger under the control of the control unit 10.

The voice output unit 16 has a speaker for reproducing a voice signal and an amplifier circuit for the speaker. The voice output unit 16 according to the present embodiment outputs a change trigger such as voice of an agent or music under the control of the control unit 10.

The storage unit 17 is realized by a read only memory (ROM) that stores a program used for processing of the control unit 10, calculation parameters, and the like, and a random access memory (RAM) that temporarily stores parameters and the like that change appropriately.

The configuration of the user terminal 1 according to the present embodiment has been specifically described above. Note that the configuration of the user terminal 1 is not limited to the example illustrated in Fig. 3. For example, the user terminal 1 may include a smell output unit which outputs "smell" as an example of a change trigger. Furthermore, at least a part of the configuration illustrated in Fig. 3 may be provided in an external device.

Furthermore, at least a part of the configuration illustrated in Fig. 3 may not be included. For example, in a case where the user terminal 1 is realized by a neck band-type wearable device as illustrated in Fig. 2, the display unit 15 may not be provided. The neck band-type wearable device illustrated in Fig. 2 is a neck band-type speaker, and sounds are output from the speakers provided at both ends. Furthermore, a speaker provided in such a neck band-type speaker can give an auditory effect that sounds can be heard at the ear using, for example, virtual phones technology (VPT). Furthermore, in a case where an earphone (not illustrated) is connected to the neck band-type speaker by wire or wirelessly, sound can be output from the earphone. The earphone may be an open-type earphone (a type of which the ears are not blocked). In this case, the surrounding environment sound is easily heard, and therefore safety is relatively kept even if it is worn on a daily basis.

### <2-2. Configuration of Server 2>

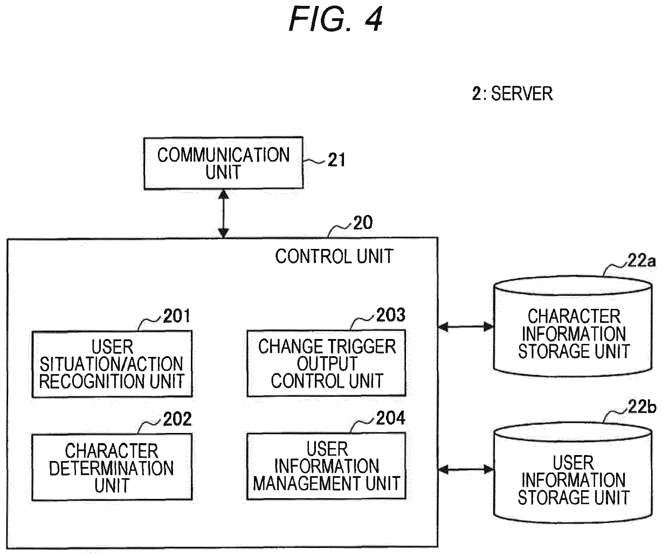

Fig. 4 is a block diagram illustrating an example of the configuration of the server 2 according to the present embodiment. As illustrated in Fig. 4, the server 2 includes a control unit 20, a communication unit 21, a character information storage unit 22a, and a user information storage unit 22b.

### (Control unit 20)

The control unit 20 functions as an arithmetic processing device and a control device and controls the overall operation in the server 2 according to various programs. The control unit 20 is realized by, for example, an electronic circuit such as a central processing unit (CPU) or a microprocessor. Furthermore, the control unit 20 may include a read only memory (ROM) that stores programs to be used, operation parameters, and the like, and a random access memory (RAM) that temporarily stores parameters and the like that change appropriately.

Furthermore, the control unit 20 according to the present embodiment also functions as a user situation/action recognition unit 201, a character determination unit 202, a change trigger output control unit 203, and a user information management unit 204.

The user situation/action recognition unit 201 recognizes (including analysis) a user situation, a surrounding situation (peripheral environment), and an action on the basis of sensor information and voice information transmitted from the user terminal 1. Furthermore, the user situation/action recognition unit 201 can also perform action recognition on the basis of a schedule registered in advance by the user and posted contents (text, image, position information, who is with the user) to a social network service.

The character determination unit 202 determines characters possessed by the user and characters currently appearing. For example, the character determination unit 202 makes a determination on the basis of a predetermined questionnaire answer input by the user, a post history to a social network service, a schedule history, and an action history based on sensor information. In this case, the character determination unit 202 may perform character determination with reference to a character determination rule registered in advance in the character information storage unit 22a, or may learn an appearance status of the user's character by machine learning.

The change trigger output control unit 203 determines whether or not to change the current character of the user and performs control to output information serving as a trigger for changing the character. Examples of the change trigger include some information presentation or voice call by agent voice, other voices, music, video, pictures, posting history of the user to the past social network service, smell, and the like.

The user information management unit 204 registers various types of information related to the user, such as characters possessed by the user, appearance patterns of respective characters, and action history of the user, in the user information storage unit 22b and manages them.

### (Communication unit 21)

The communication unit 21 transmits and receives data to and from an external device by wire or wirelessly. The communication unit 21 communicates with the user terminal 1 via the network 3 by, for example, a wired/wireless local area network (LAN), wireless fidelity (Wi-Fi, registered trademark) or the like.

### (Character information storage unit 22a)

The character information storage unit 22a stores various information related to characters. For example, the character information storage unit 22a stores character determination rules. Examples of the rules include a rule of determining "work character" or "school character" by determining that a user is at school or at office (which can be estimated from the age of the user) in a case where the user stays at the same place relatively on a regular basis during the day of a weekday, and a rule of determining "mommy character" by estimating a home in a case where the user stays in the same place relatively on a regular basis at night and also from a family structure and the like of the user. Furthermore, there are a rule of determining "character in girls' association" in a case where a conversations is lively in a situation where the user is with a friend at a restaurant with reference to map information, and determining "relaxed character" in a case where it is recognized from biological information and the like that the user is relaxed. Furthermore, the character information storage unit 22a also stores information (name, features, change trigger information, etc.) of characters created on the system side.

### (User information storage unit 22b)

The user information storage unit 22b stores various types of information related to the user, such as characters possessed by the user, appearance patterns of respective characters, and action history of the user. Furthermore, change trigger information for each character of the user may also be stored.

The configuration of the server 2 according to the present embodiment has been specifically described above. Note that the configuration of the server 2 illustrated in Fig. 4 is an example, and the present embodiment is not limited to this. For example, at least a part of the configuration of the server 2 may be in an external device, and at least a part of each function of the control unit 20 may be realized by the user terminal 1 or a communication device (for example, a so-called edge server etc.) in which the communication distance is relatively close to the user terminal 1. By appropriately distributing the configuration and functions of the server 2, it is possible to improve real-time performance, reduce processing load, and secure security.

### << 3. Operation Processing>>

Subsequently, operation processing of the information processing system according to the present embodiment will be specifically described using the drawings.

### <3-1. Character Determination Processing>

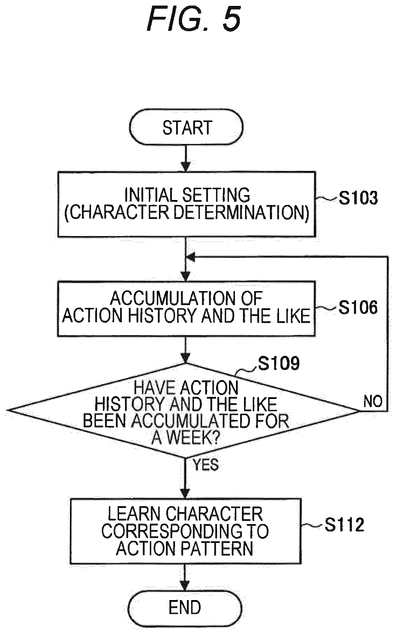

First, character determination processing will be described with reference to Fig. 5. Fig. 5 is a flowchart of character determination processing according to the present embodiment.

As illustrated in Fig. 5, first, the server 2 performs initial setting for character determination using the user terminal 1 (step S103). For example, the user terminal 1, which has a configuration including the operation input unit 12 and the display unit 15, such as a smartphone, a tablet terminal, and a PC, is caused to display an attribute input screen or a questionnaire input screen, thereby allowing the user to input initial setting information. The input information is transmitted from the user terminal 1 to the server 2. The attribute input is assumed to be, for example, gender, age, occupation, family structure, hometown, and the like. Furthermore, in the questionnaire (personality diagnosis), items that can analyze the user's personality, deep psychology, potential desires, etc., are assumed as described below.

- Do you keep a meeting time properly?
- Do you severely criticize people?
- Do you often depreciate other people, or are you self-assertive?
- Do you have a high ideal and do your best with things?
- Do you follow public rules?
- Do you like working?
- What do you want to be?
- Where is your favorite place?
- Where do you go often?
- What is your favorite musician, music, movie, actor, and line?
- What is your favorite memories?
- Do you have a boyfriend?

Furthermore, the server 2 acquires the user's past post history (comments, images, exchanges with friends) to a social media service, schedule history, position information history, action history, etc., and analyzes in what kind of situation and what kind of behavior, remarks, etc., the user performs and what kind of emotion the user has.

Thus, one or more characters (main characters) possessed by the user are determined on the basis of analysis results of attribute information, questionnaire response information, post history, schedule history, behavior history and the like, which are acquired as initial settings. Thus, as an example, it is determined that one user has four characters (personalities) such as "lively character"(who is always fine, loves a festival, and appears at girls' association when going back to hometown), "work character" (who emphasizes the balance to go well in the organization and does not express one's feeling while keeping a hardworking image), "dark-natured character" (who has dark and negative feelings, cannot express one's feelings, and is tired and has no motivation), and "shrewd character" (who manipulates the people around him/her and puts priority on one's own benefit).

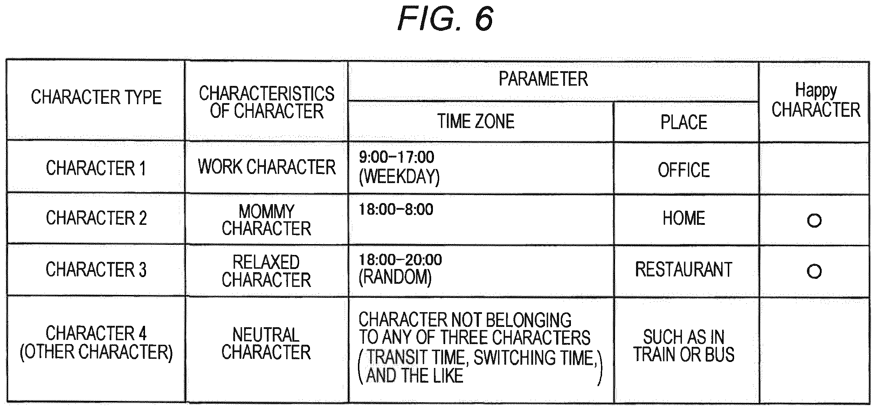

The determined character information of the user is accumulated in the user information storage unit 22b. Furthermore, the character determination unit 202 may set, in the characters of the user, a character that makes the user feel happy or have fun as a happy character. Here, Fig. 6 illustrates an example of main character information of the user.

As illustrated in Fig. 6, the character information includes types of characters possessed by one user and parameters (appearing time zone and place) of a situation in which each character appears. Furthermore, as described above, a character that makes the user feel happy or have fun is set as a happy character. Parameters of the situation in which each character appears are set on the basis of an attribute and a questionnaire answer input in the initial setting, the past post history, schedule information, action history, and the determination rule registered in advance ("work character" appears in the working hours (usually from 9:00 to 17:00 on weekdays), etc.). Such parameters may be appropriately corrected according to accumulation of action history and the like described below.

Next, after the server 2 grasps characters at the initial setting to a certain degree, the server 2 continuously accumulates the daily action history and the like of the user (for example, every five minutes) (step S106). The daily activity history and the like are, for example, daily conversations of the user acquired by the user terminal 1, position information (transit history), activity history (when, where, and what action (walk, run, sit, ride on a train, and the like) is taken), music the user listened to, the environmental sound of the city where the user walked, scheduler input information, posting to a social network, and the like, and those are accumulated in the user information storage unit 22b.

Then, in a case where the character is accumulated for a predetermined period (for example, one week) (step S109/Yes), the character determination unit 202 learns a character corresponding to the user's daily action pattern on the basis of the accumulated information (step S112). Accumulation and learning are repeated periodically to improve the accuracy of the character information.

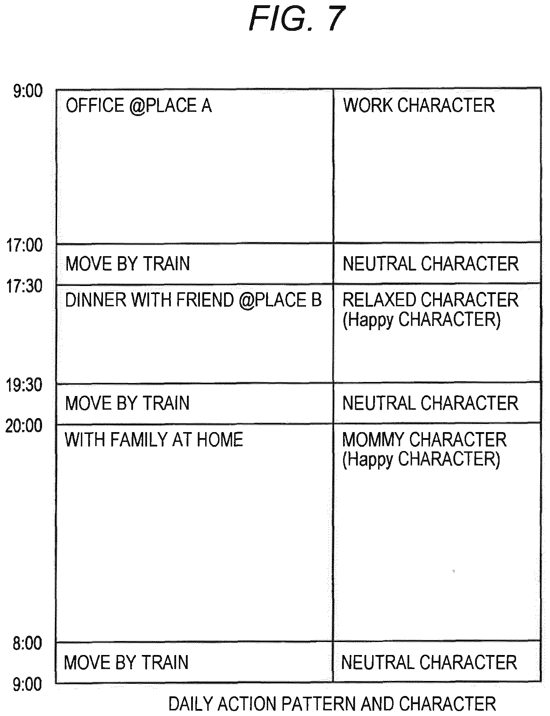

Here, Fig. 7 illustrates an example of a daily action pattern and an appearing character. As illustrated in Fig. 7, it can be seen that the user uses a plurality of characters in a day. For example, the work character is recognized in an office (place A) from 9:00 to 17:00, the neutral character not belonging to any particular character is recognized while moving, and the relaxed character is recognized at a dinner party with friends from 17:30 to 19:30, and the mommy character is recognized from 20:00 to 8:00 in the next morning with a family at home.

The character determination processing has been specifically described above. Note that, it is also possible to notify the user of the character determination result and cause the user to correct it. Furthermore, the above questionnaire may be periodically performed to correct and update character information. Furthermore, the user may register by him/herself that "now is XX character" and may register a character for a time zone using a scheduler.

Furthermore, although the time and the place have been mainly described as the situation under which the user uses different characters, this embodiment is not limited to this. For example, in a case where the user uses a plurality of social network services, characters may be used properly for each service. Therefore, it is also possible to determine and register as character information which character is applied in which social network service.

### <3-2. Change Trigger Output Processing>

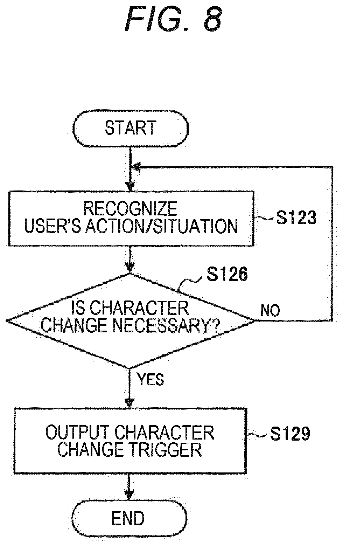

Subsequently, how to output a change trigger for changing a character of the user will be described with reference to Fig. 8. Fig. 8 is a flowchart of change trigger output processing according to the present embodiment.

As illustrated in Fig. 8, first, the user situation/action recognition unit 201 of the server 2 recognizes user's situation and action in real time on the basis of voice information input by the voice input unit 13 of the user terminal 1 and various sensor information detected by the sensor 14 (step S123). For example, in a case where it can be seen the position information indicates that the user is in an office, it is recognized that the user is working, and in a case where it can be seen the position information and acceleration sensor information indicate that the user goes out of the office and is walking to a station, it is recognized that the user is going back home.

Next, the change trigger output control unit 203 determines whether or not a character change is necessary (step S126). For example, in a case where the user is in the office and in "work character" during a time zone that is usually "mammy character" (refer to Fig. 7), the change trigger output control unit 203 determines that it is necessary to change to "mammy character" (at least any one of happy characters) on the basis of a criteria prioritizing the happy characters. Furthermore, the change trigger output control unit 203 may determine that it is necessary to change to any one of the happy characters in a case where the user sighs many times (detected by voice information, respiration sensor information, etc.) or is tired (detected by voice information (murmurs such as "I'm tired"), biometric sensor information, motion sensor, etc.).

Then, in a case where it is determined that the character change is necessary (step S126/Yes), the change trigger output control unit 203 performs control to output a change trigger that is a trigger for changing to the happy character (step S129). The change trigger is, for example, provision of information for prompting a change in action, and a proposal by an agent (for example, a proposal to prompt the user at least to leave a "office", such as "why don't you buy sweets back home?"), an environmental sound related to the happy character (for example, a voice that evokes the environment of "mammy character", such as a child's voice), a video (for example, a sound that evokes the environment of "mammy character", such as a picture of a child), a smell (for example, a sound that evokes the environment of "mammy character", such as the smell of a house), and the like are assumed.

The output control of a change trigger according to the present embodiment has been described above. Note that, in the example described above, the necessity of character change is automatically determined from the situation of the user, but the present embodiment is not limited to this, and the necessity of the character change may be determined on the basis of the schedule previously input by the user. For example, in a case where the schedule for work is up to 17:00, and the time for the mommy character is scheduled to be from 18:00, if the user is at an office even after 18:00 and remains the work character, it may be determined that a character change is necessary.

This allows the user to appropriately control his/her character with the assistance of an agent, and to take unconsciously or deliberately an action of establishing a beneficial, fortunate or favorable relationship for the user.

For example, when a female user A in her twenties working in a company walks out of the office after 22:00 on Friday after finishing a meeting until 21:00, a wearable device (user terminal 1) worn by the user A recognizes on a basis of her gait and sigh, biological information, schedule information of this week, web history, and the like that the user A has finished a busy week at work, is walking to a station with heavy footsteps without looking at the shopping WEB site that she always checks, and the user A is changing from "work character" to "dark-natured character".

Note that, as an example, each function of the server 2 illustrated in Fig. 4 is assumed to be executed by agent software (application program) downloaded to the user terminal 1. Furthermore, since the user A has wanted to concentrate on work this week by the scheduler, it can be set that the character change trigger output (character change service according to the present embodiment) is turned off (or priority setting of "neutral character") in business time, and automatically turned on after 21:00 after a Friday meeting.

As described above, since the user A has been changed to "dark-natured character", the user terminal 1 searches for a happy character possessed by the user A. For example, in a case where the user A's" character who loves hometown" (a character that has a strong love for her hometown and the user feels at ease with his/her friends (childhood friends) there (relieve herself)) is set to a happy character, the user terminal 1 searches for history information (voice, laugh of friends, photo, videos, posting history, etc. in a fun drink party with hometown friends) when the user A returns hometown and becomes a " character who loves hometown" and provides the user with the information as a change trigger. For example, in a case where the user terminal 1 is an open-air earphone worn on the ears of the user A, a voice and a laugh of a friend recorded in a fun drink party with a hometown friend may be mixed with surrounding environmental sounds (noises) so as to be output controlled to be faintly audible.

Note that in a case where the user terminal 1 is a glasses-type terminal, a slide show of the photos taken when the user returns hometown may be made within a range not disturbing user's view. In a case of a smart phone, a speech of a friend at a drinking party in hometown may be displayed faintly with a speech bubble or a post at the time may be displayed at the end of a display screen.

In this manner, the user A can remind the time when the user had fun and he/she was fine and the user terminal prompts to change to a happy character herself.

As a result, the user A changes from "dark-natured character" to a bright and energetic character, and for example, makes a reservation for yoga while thinking "I will get up early tomorrow and do morning yoga I have wanted" as an voluntary action. In a case where the morning yoga schedule comes up in the schedule, the user terminal 1 can estimate that the character change is successful (effective).

In addition, the user A changes from "dark-natured character" to "character who loves hometown" and takes out a smartphone to call or send a message to a hometown friend. In a case where a contact to a friend is made or a schedule to meet a friend comes up, the user terminal 1 can estimate that the character change is successful (effective).

### <3-3. Parameter Correction Processing>

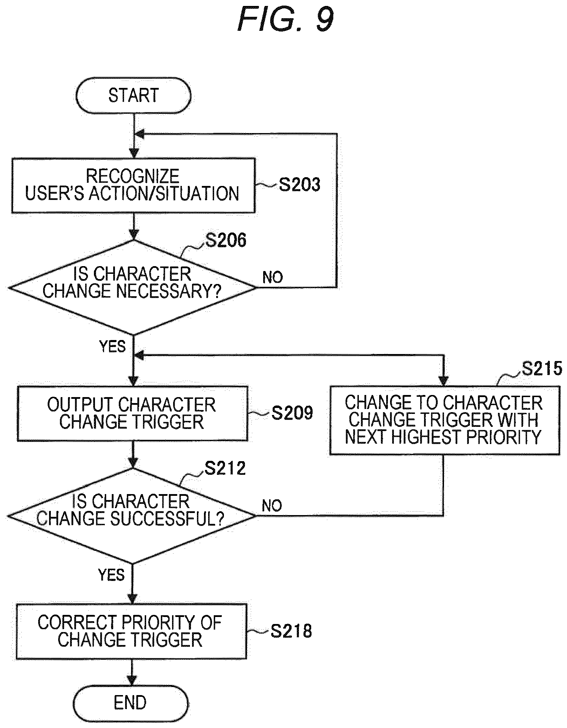

Subsequently, parameter correction processing will be described with reference to Figs. 9 to 11. In other words, when the system outputs a change trigger, on the basis of the actions taken by the user voluntarily, the user's character change thereafter, changes in the user's emotions and situations, and the like, the system can learn when and what change triggers should have been given for succeeding in a change to the happy character, and also at what time prompting to change to the happy character should have been made, and it is possible to correct the default character information parameters (including the priority of change trigger).

### (Correction of priority of change trigger)

Fig. 9 is a flowchart of a process of correcting the priority of change triggers according to the present embodiment. Steps S203 to S209 illustrated in Fig. 9 are similar to the processing of steps S123 to S129 described with reference to Fig. 8, and thus detailed description thereof will be omitted.

Note that, in the present embodiment, in a case where there is a plurality of change triggers for a certain character, the priority may be set in advance as a default. The default priority may be random, or may be arranged by estimating the priority from the tendency of the user's past history. For example, a case will be described where there are change triggers whose priority are set as follows, and the change triggers are output from the upper side.

**[Table 1]**

| PRIORITY | TYPE |
|---|---|
| 1 | VOICE OF AGENT |
| 2 | MUSIC |
| 3 | VIDEO |
| 4 | SMELL |

After outputting the change triggers in a method of the highest priority, the control unit 20 of the server 2 determines whether or not a character change is successful (step S212). For example, in a case of outputting a change trigger for prompting a change to the happy character, the control unit 20 can determine whether or not a character change is successful on a basis of whether or not a happy (happy, fine, positive) action change happens such as that the sigh of the user is reduced, a footstep is lightened, a user is smile, a schedule for meeting with or going out with someone is input, the user contacts a friend or a lover, or the user feels happy. Furthermore, it may also be determined that the character change is successful even in a case where there is a change from a situation (place, environment) that the user wants to leave, even before completely changing to a happy character, such as leaving office.

Next, in a case where the character change is not successful (step S212/No), the change trigger output control unit 203 changes to the change trigger with the next highest priority (step S215), returns to step S209, and outputs the change trigger (step S209).

Next, in a case where the character change is successful (step S212/Yes), the priority of the change trigger is corrected (step S218). In other words, the change trigger (method, content) in which the character change is successful is learned.

For example, in "agent's voice", in a case where there is no change in the user, a change trigger in "music" is given, and in a case where it is successful, the priority of the change trigger is changed as indicated in Table 2 below.

**[Table 2]**

| PRIORITY | TYPE |
|---|---|
| 1 | MUSIC |
| 2 | VOICE OF AGENT |
| 3 | VIDEO |
| 4 | SMELL |

Furthermore, in a case where there is no change in the user also in "music", a change trigger is given in the next "video", and in a case where it is successful, the priority of the change trigger is changed as indicated in Table 3 below.

**[Table 3]**

| PRIORITY | TYPE |
|---|---|
| 1 | VIDEO |
| 2 | VOICE OF AGENT |
| 3 | MUSIC |
| 4 | SMELL |

### (Correction of parameters by user)

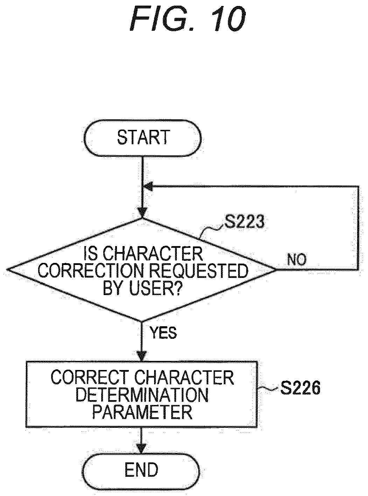

Fig. 10 is a flowchart of operation processing when parameter correction is requested by the user, according to the present embodiment. As illustrated in Fig. 10, in a case where the user has made an explicit character correction request (step S223/Yes), the control unit 20 of the server 2 corrects the character determination parameter in accordance with the user's instruction (step S226).

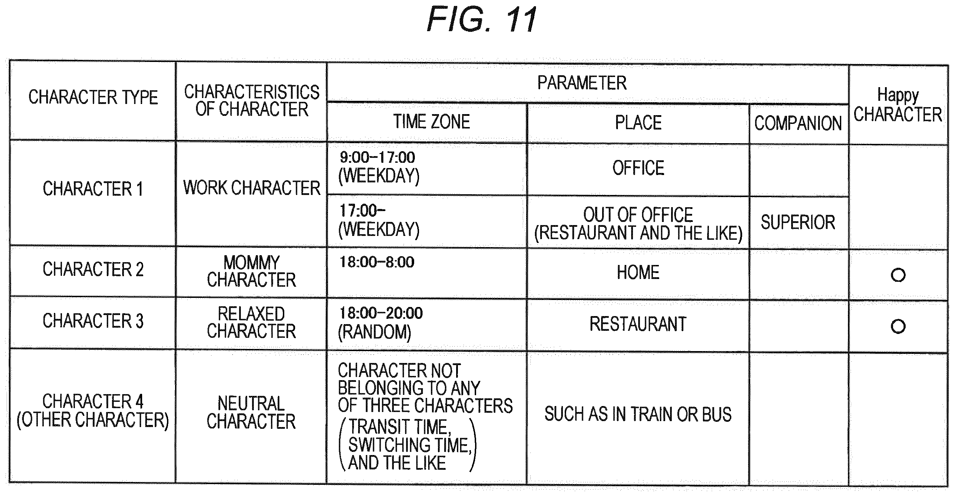

For example, in a case where the user is the work character outside the office despite a time zone of the mommy character, usually at 20:00 on weekdays (for example, it can be determined from word usage, conversation contents, fatigue level, smile level, etc.), the user terminal 1 presents a change trigger to the happy character. However, in a case where it is correct to be a work character since the user is actually eating and drinking with a superior and a business partner, the user requests parameter correction by the operation input unit 12 since it is correct to be a work character now. The correction content of the parameter may be manually input by the user, or may be automatically input by recognizing the situation on the user terminal 1 side. For example, time zones, places, and people around the user are recognized (recognizable by a camera, a voiceprint, speech contents, schedule information), and the parameters are corrected. Here, Fig. 11 illustrates an example of parameter correction according to the present embodiment. As illustrated in Fig. 11, in a case where the user is together with a superior at a restaurant outside the company after 17:00 on a weekday, a work character is set. As a result, in a case where the user is together with a superior at a restaurant outside the company after 17:00 on a weekday, it is possible to give priority to "work character", and the accuracy of the character change service by this system is improved. Furthermore, the trust between the user and the system (agent) and the degree of trust also increase.

### (Supplementary of characters)

Furthermore, the user can supplement characters he/she wants to be for pay or free of charge. The obtained character information is accumulated in the user information storage unit 22b together with the main characters.

For example, in a case where a celebrity character (happy character) is obtained, for example, the following change trigger is supplemented as celebrity character information.

**[Table 4]**

| PRIORITY | TYPE | CONTENTS |
|---|---|---|
| 1 | VOICE OF AGENT | "SHALL WE GO TO EAT IN XX (EXPENSIVE AREA)?" |
| 2 | MUSIC | CLASSIC MUSIC |
| 3 | VIDEO | VIDEO IN PRIVATE BEACH |
| 4 | SMELL | FRAGRANCE |

The activation timing (parameters such as time and place) of the celebrity character may be set by the user (such as input to a linked scheduler). Furthermore, recommended setting may be made such that the system makes determination appropriately.

### <3-4. Processing of Outputting Change Trigger to Minor Character Minor Characters>

Subsequently, change trigger output processing to a rare character which is rarely detected from everyday behavior patterns will be described. As a result of the character determination in the initial setting, minor characters (characters that appear only under a certain situation, characters that are normally suppressed intentionally) can be extracted in addition to the user's main characters. Such minor characters are grasped by a default questionnaire or past history, but in a case where the frequency of appearance is, for example, once in three months, they are not learned as characters corresponding to a daily action pattern, and in a case where the user intentionally suppresses the characters, there is a high possibility that the characters are not registered in a linked scheduler.

However, it is also possible for the system to determine that it is better to change to such a minor character according to the user situation, and to provide a change trigger to such a character.

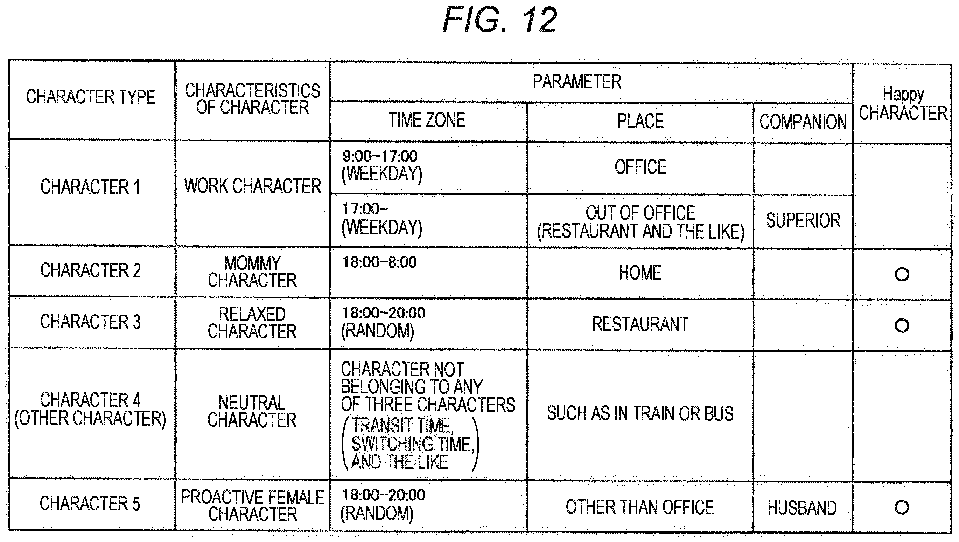

For example, among minor characters of the user A, there are a proactive female character (especially a character that takes an active action in love life) that rarely appears. For example, as illustrated in Fig. 12, although it could be grasped that the user A has a proactive female character as a character diagnosis result, the character rarely appears.

However, at present after ten years from marriage, the character rarely appears in the user A. When the user A relaxes with her husband at home, there is almost no conversation between the husband who originally had only a few words and the user A who is obsessed with reading, and the communication is lacking. The user A who wants to communicate more with her husband or go on a date or spend a happy time with him makes setting to output a change trigger that prompts a change to a proactive female character in the system.

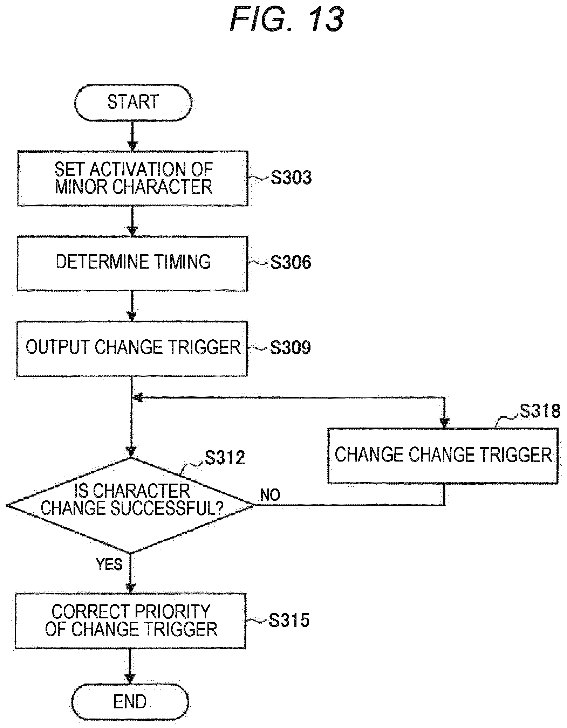

Specifically, for example, when the user A is at home with her husband, the character may be activated when there is no conversation between the couple for more than 5 minutes, or activated in a situation where laughter or smile is not detected for a certain period of time. Hereinafter, this will be specifically described with reference to Fig. 13.

Fig. 13 is a flowchart of a processing of outputting a change trigger to minor character to a minor character according to the present embodiment. As illustrated in Fig. 13, first, the user sets an activation condition (parameter) of the minor character (step S303). The activation condition input by the user is stored in the user information storage unit 22b of the server 2 as a parameter of the minor character.

Next, the change trigger output control unit 203 of the server 2 determines a change timing to a minor character on the basis of voice information and sensor information acquired by the user terminal 1 (step S309) and outputs a change trigger at the timing satisfying the condition (step S309). The change trigger to the minor character may be, for example, as indicated in Table 5 below, but can be changed as appropriate.

**[Table 5]**

| PRIORITY | TYPE | CONTENTS |
|---|---|---|
| 1 | VOICE OF AGENT | "WHY DON'T YOU FLIRTING WITH HIM?" |
| 2 | MUSIC | THEME SONG OF MOVIE AND TV DRAMA THAT PROACTIVE FEMALE CHARACTER APPEARS IN |
| 3 | VIDEO | PAST TWEETS IN HIS/HER SOCIAL NETWORK SERVICE |
| 4 | SMELL | PHEROMONE-TYPE FRAGRANCE |

Next, in a case where the character change fails (step S312/No), the change trigger is changed to the next highest priority change trigger (step S318).

Next, in a case where the character change is successful (step S312/Yes), the priority of the change trigger is corrected with the successful content (step S315).

### <3-5. Change Trigger Output Processing among a Plurality of Agents>

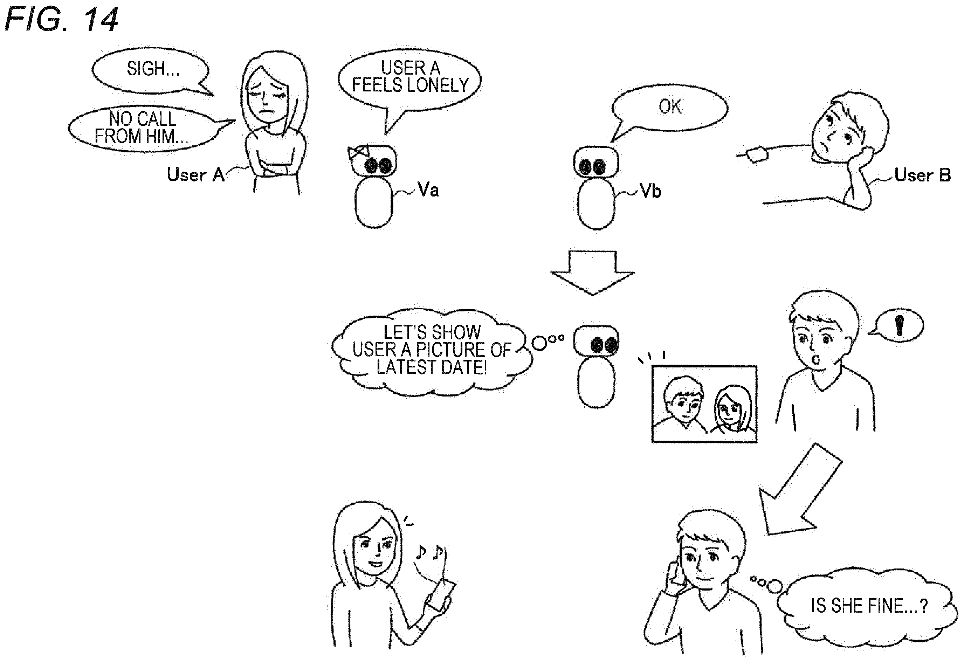

Subsequently, change trigger output processing among a plurality of agents will be described with reference to Figs. 14 to 17.

Between predetermined group members formed after mutual approval (for example, lovers, specific friend groups, family, etc.), the character information of each user is shared between agents, and the agent can request a character change to the other agent at the optimal timing.

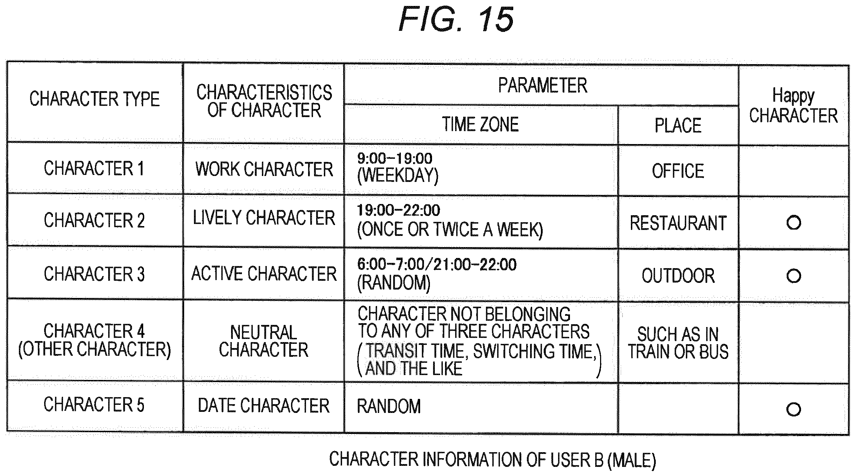

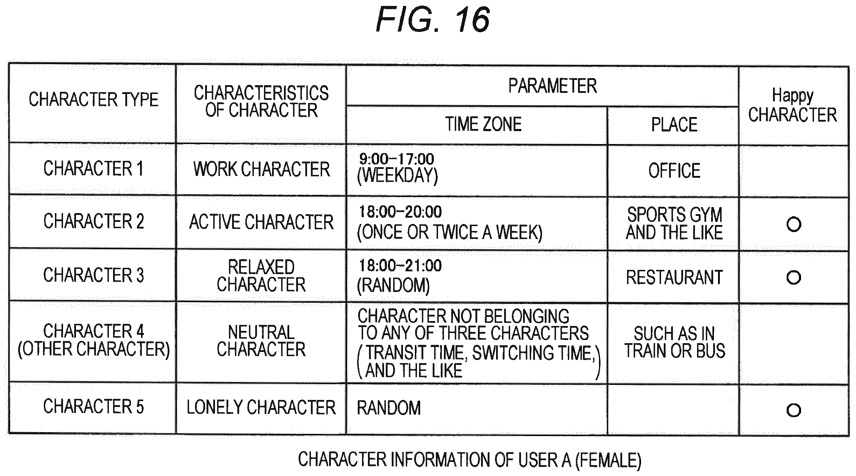

Fig. 14 is a view explaining an outline of the change trigger output processing among a plurality of agents. As illustrated in Fig. 14, for example, an agent Va determines that the user A is "lonely character" from sighing or buzzing of the user A ("want a call", "no contact", etc.). In a case where the agent determines that a contact from a lover is a trigger for changing the user A to the happy character (change trigger information), the agent Va requests an agent Vb of a user B who is a lover of the user A to change the character of the user B to a character that contacts the user A (specifically, may request the change to a specific character on the basis of the character information of the user B). A lover status can be determined from initial settings, schedule information, posting content to a social network service, and the like. Although a lover is used here, the present embodiment is not limited to this, and a person who makes the user A happy when the user A is together with the person may be extracted from the user's action history or the like. Furthermore, an example of the character information of each user to be shared is illustrated in Figs. 15 and 16.

As illustrated in Fig. 15, for example, in a case where there are a work character, a lively character, an active character, a neutral character and a date character as character information of the user B, the character estimated to contact the user A is a date character. Furthermore, as illustrated in Fig. 16, as characters of the user A, there are a work character, an active character, a relaxed character, a neutral character, and a lonely character.

Next, the agent Vb reminds the user B who seems to be bored by showing a date picture with the user A or playing a voice at the date with the user A to remind the user A to prompt to change to a date character.

If the character change is successful, the user B is expected to contact the user A. The user A side feels as if it is like a telepathy and feels happy since the user A gets contact from the user B when the user A feels lonely because of no contact from the user B.

Although the outline has been described above, the agent Va and the agent Vb are virtual, and the operation of each agent can be performed in the server 2 and each user terminal 1. Furthermore, in a case where an application for realizing the function of the server 2 illustrated in Fig. 4 is downloaded to the user terminal 1, it is possible to realize the change trigger output processing with the user terminal 1 alone.

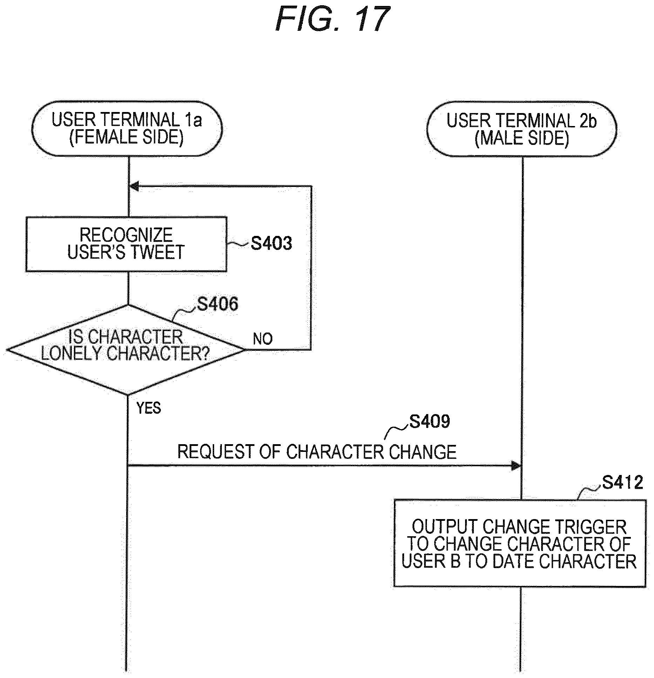

Subsequently, the change trigger output processing among a plurality of agents will be described with reference to Fig. 17. Fig. 17 is a sequence diagram indicating change trigger output processing among a plurality of agents according to the present embodiment.

As illustrated in Fig. 17, first, the user terminal 1a of the user A recognizes a murmur of the user (step S403), and in a case where the user is a lonely character (step S406/Yes), the user terminal 1a requests a character change to the user terminal 1b of the user B so as to give a change trigger to make the user A change to a happy character from the user B to the user A (step S409) .

Next, the user terminal 1b of the user B outputs a change trigger so as to change the user B into a date character that contacts the user A (giving a change trigger for changing the user A to a happy character) (step S412) .

### <3-6. Advertising>

Furthermore, in the present embodiment, it is also possible to present an advertisement according to a character of the user. Depending on the character, the sense of money, the item to be purchased, and the service desired to be used may be different, so it is possible to present the user with an optimal advertisement in accordance with the character.

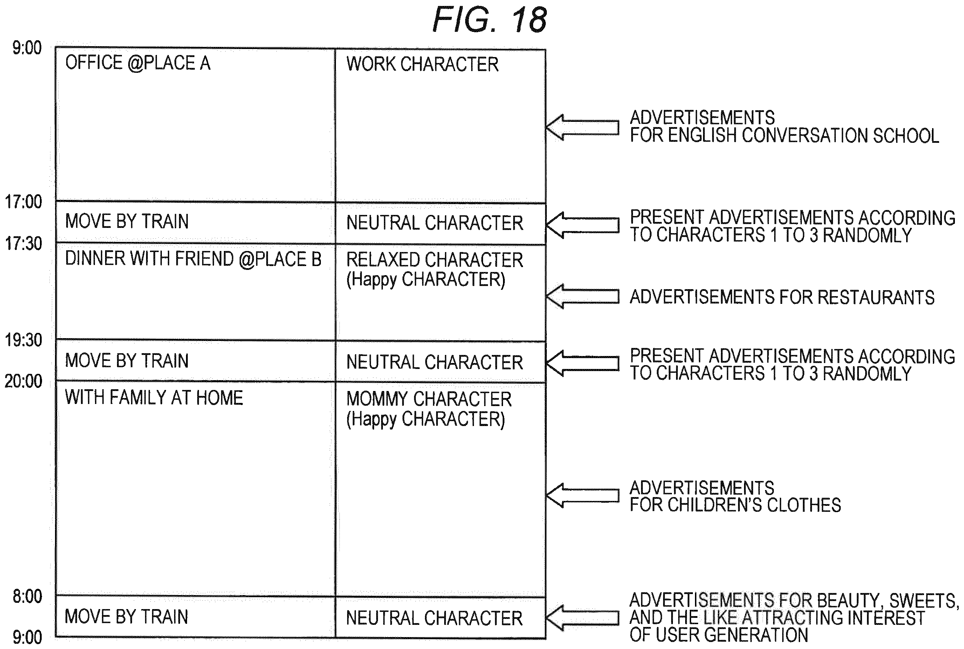

Fig. 18 is a diagram explaining an example of advertisement presentation according to characters according to the present embodiment. As illustrated in Fig. 18, for example, advertisements for English conversation school in the case of a work character, advertisements for children's clothes in the case of a mommy character, and advertisements of gourmet information and restaurants in the case of a relaxed character can be presented. Furthermore, in the case of neutral characters, advertisements corresponding to all characters, advertisements according to user attributes (such as fashion, beauty, sweets-related advertisements according to hobbies, gender, age, etc.), and also advertisements for popular products or events that are popular at that time may be presented randomly.

Furthermore, on the basis of the user's various histories (time, place, companion, purchase history, etc.) when each character is appearing, the user's preference and tendency at the time of each character appearance are analyzed, and an advertisement matching the character can be also provided. Advertisements are provided by the user terminal 1 in the form of images, voice, and the like.

Furthermore, the timing of the advertisement provision may be in accordance with the current character, or may be in accordance with the character expected to appear next.

Furthermore, when a character managing a family budget, such as a mammy character, is appearing, advertisements for other characters may be presented together, and the advertisements may be presented intensively when the user is a neutral character in which a vehicle travel time is the longest.

### <3-7. Guidance to Potential Character who Wants to Be>

In the present embodiment, it is also possible to determine the potential character the user wants to be on the basis of the past murmur or contents posted to a social network service, etc., and to provide an opportunity to change to such a character.

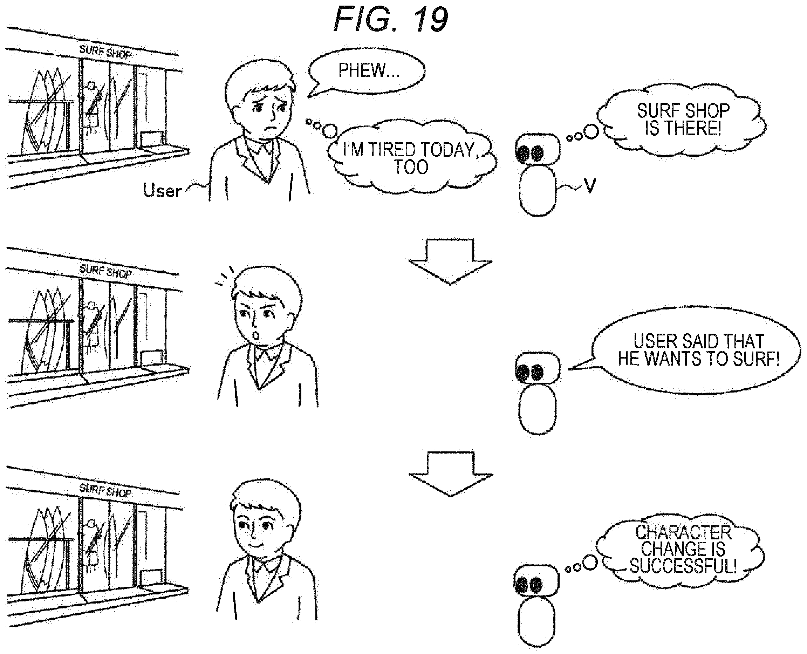

Fig. 19 is a view explaining a case of guiding to a potential character that the user wants to be. For example, the case is assumed where the user murmured that "I want to try surf" half a year ago, but did not take any specific action and forgot it.

In such a case, as indicated in the upper part of Fig. 19, when it is detected that the user is walking near the surf shop at one time, as indicated in the middle part of Fig. 19, the agent V says "You said before that you wanted to try surf", and it is possible to draw out the user's interest in surfing, as indicated in the lower part of Fig. 19. The change trigger is not limited to the voice of the agent, and may be a method of reproducing and displaying the past murmur of the user or showing a video of surfing.

In this way, the system can also give a potential change trigger that is forgotten by the user.

### << 5. Summary >>

As described above, in the information processing system according to the embodiment of the present disclosure, it is possible to present appropriate information so as to bring out a more preferable user's character.

The preferred embodiments of the present disclosure have been described above in detail with reference to the accompanying drawings, but the present technology is not limited to such examples. It is obvious that persons who have ordinary knowledge in the technical field of the present disclosure can conceive various modifications or corrections within the scope of the technical idea described in the claims, and naturally understood that such modifications or corrections belong to the technical scope of the present disclosure.

For example, a computer program for causing a hardware such as a CPU, ROM, and RAM built in the user terminal 1 or the server 2 described above to exhibit the function of the user terminal 1 or the server 2 can also be created. Furthermore, a computer readable storage medium storing the computer program is also provided.

Furthermore, the effects described in the present specification are merely illustrative or exemplary, and not limiting. That is, the technology according to the present disclosure can exhibit other effects apparent to those skilled in the art from the description of the present specification, in addition to or instead of the effects described above.

Note that the present technology can also have the following configurations.
(1) An information processing apparatus including a control unit configured to:
   determine a character of a user;
   determine whether or not it is a timing to change to a predetermined character; and
   perform control so as to output a trigger for prompting a change to the predetermined character at the change timing.
(2) The information processing apparatus according to (1), in which the control unit refers to information regarding one or more characters possessed by the user, and determines a character of the user according to a current time, place, or environment.
(3) The information processing apparatus according to (1) or (2), in which the control unit refers to information regarding one or more characters possessed by the user, and determines a character of the user on the basis of at least one of voice information, action recognition, or biological information.
(4) The information processing apparatus according to any one of (1) to (3), in which the control unit determines whether or not it is a timing to change to the predetermined character on the basis of at least one of time, place, environment, voice information, action recognition, or biological information.
(5) The information processing apparatus according to any one of (1) to (4),
   in which one or more characters possessed by the user are set as to whether or not to be a happy character, and
   the control unit performs control to output a trigger for changing the user to the happy character.
(6) The information processing apparatus according to any one of (1) to (5),
   in which the control unit
   determines a character and the change timing on the basis of character information including an appearance time, place, or environment of one or more characters possessed by the user.
(7) The information processing apparatus according to any one of (1) to (6),
   in which the control unit
   corrects character information including an appearance time, place, or environment of one or more characters possessed by the user on the basis of a feedback of the user after outputting a trigger for changing to the predetermined character.
(8) The information processing apparatus according to any one of (1) to (7),
   in which the control unit
   determines one or more characters possessed by the user on the basis of attribute information, questionnaire response information, action history, schedule history, voice history, or post history of the user.
(9) The information processing apparatus according to any one of (1) to (8),
   in which the control unit
   performs control to output a trigger with a next highest priority in a case where the user's action does not change after outputting a trigger for changing to the predetermined character.
(10) The information processing apparatus according any one of (1) to (9),
   in which the control unit
   performs control to change a character of a predetermined other user who is estimated to affect the user, as the trigger for prompting a change to the predetermined character.
(11) The information processing apparatus according to any one of (1) to (10),
   in which the control unit
   performs control to present advertisement information according to a character of the user.
(12) An information processing method, by a processor, including:
   determining a character of a user;
   determining whether or not it is a timing to change to a predetermined character; and
   performing control to output a trigger for prompting a change to the predetermined character at the change timing.
(13) A program for causing a computer to function as a control unit configured to:
   determine a character of a user;
   determine whether or not it is a timing to change to a predetermined character; and
   perform control to output a trigger for prompting a change to the predetermined character at the change timing.

### REFERENCE SIGNS LIST

- 1: User terminal
- 2: Server
- 3: Network
- 4: Base station
- 10: Control unit
- 11: Communication unit
- 12: Operation input unit
- 13: Voice input unit
- 14: Sensor
- 15: Display unit
- 16: Voice output unit
- 17: Storage unit
- 20: Control unit
- 21: Communication unit
- 22a: Character information storage unit
- 22b: User information storage unit
- 201: User situation/behavior recognition unit
- 202: Character determination unit
- 203: Change trigger output control unit
- 204: User Information management unit

## Claims

1. An information processing apparatus comprising a control unit configured to:
determine a character of a user;
determine whether or not it is a timing to change to a predetermined character; and
perform control so as to output a trigger for prompting a change to the predetermined character at the change timing.

2. The information processing apparatus according to claim 1, wherein the control unit refers to information regarding one or more characters possessed by the user, and determines a character of the user according to a current time, place, or environment.

3. The information processing apparatus according to claim 1, wherein the control unit refers to information regarding one or more characters possessed by the user, and determines a character of the user on a basis of at least one of voice information, action recognition, or biological information.

4. The information processing apparatus according to claim 1, wherein the control unit determines whether or not it is the timing to change to the predetermined character on a basis of at least one of time, place, environment, voice information, action recognition, or biological information.

5. The information processing apparatus according to claim 1,
wherein one or more characters possessed by the user are set as to whether or not to be a happy character, and
the control unit performs control to output a trigger for changing the user to the happy character.

6. The information processing apparatus according to claim 1,
wherein the control unit
determines a character and the change timing on a basis of character information including an appearance time, place, or environment of one or more characters possessed by the user.

7. The information processing apparatus according to claim 1,
wherein the control unit
corrects character information including an appearance time, place, or environment of one or more characters possessed by the user on a basis of a feedback of the user after outputting a trigger for changing to the predetermined character.

8. The information processing apparatus according to claim 1,
wherein the control unit
determines one or more characters possessed by the user on a basis of attribute information, questionnaire response information, action history, schedule history, voice history, or post history of the user.

9. The information processing apparatus according to claim 1,
wherein the control unit
performs control to output a trigger with a next highest priority in a case where the user's action does not change after outputting a trigger for changing to the predetermined character.

10. The information processing apparatus according to claim 1,
wherein the control unit
performs control to change a character of a predetermined other user who is estimated to affect the user, as the trigger for prompting a change to the predetermined character.

11. The information processing apparatus according to any one of claims 1 to 10,
wherein the control unit
performs control to present advertisement information according to a character of the user.

12. An information processing method, by a processor, comprising:
determining a character of a user;
determining whether or not it is a timing to change to a predetermined character; and
performing control to output a trigger for prompting a change to the predetermined character at the change timing.

13. A program for causing a computer to function as a control unit configured to:
determine a character of a user;
determine whether or not it is a timing to change to a predetermined character; and
perform control to output a trigger for prompting a change to the predetermined character at the change timing.
